# FASCICULE DE BREVET EUROPEEN

(11) **EP 2 735 854 B1**
(45) Date de publication et mention de la délivrance du brevet: **08.04.2020**
(21) Numéro de dépôt: 13192742.8
(22) Date de dépôt: 13.11.2013
(51) Int. Cl.: G01L 5/24, G01M 11/08, G01D 5/353, G01B 11/16, G01L 1/24

(54) **Dispositif de mesure de déformation et implantation d'un tel dispositif dans un élément**
Vorrichtung zur Deformationsmessung und Einsatz der Vorrichtung in einem Element
Apparatus for measuring deformation and insertion of such an apparatus into an element

(30) Priorité: 23.11.2012 FR 1261173
(43) Date de publication de la demande: 28.05.2014
(73) Titulaire: Airbus Operations, 31060 Toulouse (FR)
(72) Inventeur: Sartor, Marc, 31400 TOULOUSE (FR); Morgue, Patricia, 31770 COLOMIERS (FR); Paredes, Manuel, 31130 BALMA (FR)
(74) Mandataire: Santarelli

(56) Documents cités:
- DE-A1- 10 031 412
- JP-A- 2005 010 064
- US-A1- 2007 144 267
- US-A1- 2009 217 769
- US-A1- 2011 007 996
- US-A1- 2011 199 608

## Description

La présente invention concerne un dispositif de mesure de déformation, par exemple au moyen de fibres optiques à réseau de Bragg, pour améliorer la mesure des déformations à cœur d'un élément de structure, et obtenir ainsi, notamment, un meilleur contrôle de la qualité d'un assemblage, réalisé au moyen d'un tel élément.

Un des principaux objectifs en aviation civile est l'augmentation de la durée de vie des avions.

Durant la phase de production, l'assemblage de deux éléments comprenant un matériau composite est toujours une phase longue et compliquée, et requiert généralement l'utilisation d'un élément de fixation puisqu'il n'est pas possible de les souder entre eux, contrairement à ce qui était couramment effectué avec des éléments métalliques.

De nombreuses études ont alors visé à optimiser les étapes d'assemblage et de procédé, tout en maintenant un haut niveau de qualité.

La réduction de la consommation de carburant est aussi un facteur clef à prendre en compte lors de la conception de nouveaux avions ; des économies de poids peuvent aussi être réalisées, même pour une structure métallique, en prenant en compte des contraintes d'assemblage dans une phase de conception préalable, à condition de pouvoir contrôler ultérieurement l'assemblage.

Pour cela, les méthodes de contrôle non-destructif sont de plus en plus privilégiées, même à des fins plus spécifiques telles que la phase d'assemblage.

Ainsi, la présente invention concerne une méthode non-destructive de contrôle de la qualité d'un assemblage via l'évaluation d'une contrainte à l'intérieur d'un élément de structure, et en particulier d'un élément de fixation, quel qu'il soit.

La qualité d'un assemblage est souvent associée à un niveau de contrainte atteint à l'intérieur d'un élément de fixation.

Cette contrainte (couramment appelée précontrainte ou pré-charge pour la durée de vie ultérieure lorsqu'elle résulte d'une étape d'assemblage) dans un assemblage comprenant des éléments (notamment métalliques) a une incidence directe sur la durée de vie en fatigue de l'assemblage. Le dimensionnement des éléments a donc un impact sur la durée de vie de la structure.

Il est aussi possible de réaliser des économies de poids dans la conception de ces pièces en prenant en compte ces contraintes lors de leur dimensionnement.

La précontrainte peut être atteinte à une étape finale de la phase d'assemblage lors de l'utilisation d'éléments de fixation définitifs, mais aussi à une étape plus amont dédiée à la préparation de l'assemblage lors de l'utilisation d'éléments de fixation provisoires.

Le contrôle de la contrainte peut être réalisé assez facilement dans un laboratoire en utilisant un banc d'essai de couple-tension, ou une rondelle piézoélectrique intégrée dans l'assemblage, mais aussi par mesure de déformation des éléments de fixation, ce qui peut être relié au niveau de contrainte dans l'élément par une loi de comportement contrainte-déformation. La mesure de la déformation, et plus particulièrement de l'allongement selon une direction choisie, peut être réalisée directement lorsque la structure le permet (par exemple grâce à une jauge de déformation ou un extensomètre), ou en utilisant par exemple une méthode par ultrasons.

Les déterminations de contrainte par un essai de couple-tension ou des rondelles piézoélectriques requièrent toutefois l'utilisation d'autres éléments à l'intérieur même de l'assemblage. Il est alors nécessaire d'utiliser des éléments de liaison de plus grande dimension pour les essais, impactant et modifiant alors la rigidité de l'assemblage, voire influençant le comportement de la structure, ce qui, par conséquent, n'est plus représentatif de la réalité. L'interposition de tels capteurs nécessite en outre un assemblage puis un désassemblage de la structure une fois la mesure réalisée, avec une utilisation limitée au laboratoire, c'est-à-dire qu'il n'est pas possible d'intégrer à une structure définitive destinée à être utilisée dans le produit fini.

De plus, les méthodes de mesures par ultrasons ne sont applicables qu'à certaines configurations. Ces méthodes sont, par exemple, inefficaces lorsque les éléments de fixation sont installés dans un ajustement serré ce qui induit des contraintes inhomogènes dans l'élément causant des perturbations dans la mesure du temps de propagation de l'onde ultrasonore, couramment désigné en anglais « ultrasonic wave time of flight » ou lorsque l'élément de liaison est serti, ou si un élément de structure est rompu lors de l'installation, ne permettant plus de se référer à un temps de propagation initial de l'élément avant utilisation.

Ainsi, ces techniques ne sont pas adaptées à la situation au vu du niveau de précision attendu.

Une méthode impliquant l'utilisation d'un capteur à fibre optique à réseau de Bragg (ou « FBG » pour « Fiber Bragg Grating » en anglais) est alors avantageusement utilisée pour évaluer les déformations à l'intérieur d'un élément quel qu'il soit.

L'utilisation d'une fibre à réseau de Bragg (FBG) positionnée au centre d'un élément de fixation est une méthode intéressante en ce qu'elle n'induit pas de perturbation au niveau des surfaces fonctionnelles de l'assemblage. Une telle mesure est locale, et peut ainsi être effectuée dans une zone à faible gradient de déformation et par conséquent indirectement liée à la précontrainte.

L'utilisation d'une FBG est par exemple présentée dans le document US 5, 945, 665. Ce document décrit une méthode consistant à percer un trou au niveau de l'âme centrale d'un élément de fixation, à remplir le trou avec de la colle (ou tout autre matériau similaire comme par exemple de la résine), et à y installer une fibre optique, avant polymérisation de la colle.

Du point de vue de la fabrication, l'installation de la fibre optique est une opération compliquée. La colle doit être choisie en relation avec le matériau constitutif de l'élément, la fibre peut être détériorée lors de son installation (notamment de par ses dimensions, une fibre présentant un diamètre de l'ordre de quelques centaines de micromètres en moyenne), et il est difficile d'avoir un positionnement précis du réseau de Bragg par rapport à l'élément.

En outre, lorsque l'élément de fixation est ensuite utilisé dans un ajustement serré, cette technique n'est plus envisageable car le serrage génère une compression autour de la fibre ayant une incidence sur la réponse optique, et ne permet plus une analyse fiable de la mesure pour déterminer la déformation et ensuite estimer la contrainte dans l'élément de fixation.

Les documents US 2009/0217769 ou DE 100 31 412, par exemple, décrivent différents dispositifs de mesures de déformations.

Un des objectifs de la présente invention est de résoudre au moins en partie les inconvénient précités, et de proposer un dispositif et une méthode de mesure de déformation non destructive et faiblement intrusive de par le faible impact sur la structure dans un élément quel qu'il soit, et utilisable pour un élément de fixation, sans impact sur la rigidité de l'assemblage et notamment compatible avec la plupart des applications pouvant être rencontrées en aéronautique, telles que les assemblages par ajustement serré, les éléments de fixations emboutis ou sertis (par exemple un boulon serti), ou encore un élément de fixation provisoire ou dans un but d'épinglage. Un autre objectif de la présente invention est de proposer un dispositif qui permette non seulement d'aider à l'introduction d'une fibre, mais qui puisse aussi être utilisé pour introduire d'autres types de capteur.

A cet effet, est proposé, selon un premier aspect de l'invention, un dispositif de mesure de déformation comportant au moins un capteur de déformation filiforme ainsi qu'un support de forme longiligne sur lequel est positionné le capteur de déformation filiforme.

On entend ici par le fait que le dispositif de mesure comprend au moins un capteur de déformation filiforme, qu'il peut n'en comprendre qu'un, ou bien plusieurs. Le dispositif présente, de préférence, une forme fine et allongée pour pouvoir être introduit dans un trou le plus étroit possible. Pour cela, il est avantageux que le support présente une forme longiligne.

Selon l'application choisie, le capteur de déformation filiforme est torsadé.

Dans un cas général, le support peut avoir une forme tronconique, ou étagée. Sa forme est alors adaptée à l'application à laquelle il est destiné.

Il est par exemple intéressant que le support présente un axe de symétrie, par exemple selon une direction longitudinale (D). Le support présente par exemple une section hexagonale ou circulaire.

Il est aussi intéressant que le support présente une forme cylindrique selon les besoins de l'application.

On entend ici par « cylindrique » que le support présente une section constante selon un axe, de préférence rectiligne, par exemple selon une direction longitudinale (D). La section peut être de toute forme tant que le support permet de maintenir la fibre en position. La section du support est par exemple circulaire, de sorte que le support présente une forme tubulaire ce qui facilite sa réalisation.

Pour faciliter la manipulation et l'installation du support, le dispositif comporte un raidisseur, pour lui conférer davantage de rigidité.

Le raidisseur est de préférence libre par rapport au support, ou fixé en au plus un point afin de ne pas influencer la mesure ; autrement dit, le raidisseur est au plus fixé en un point au support.

Le raidisseur est introduit dans un volume interne défini par une paroi du support dans un cas de support creux. Par exemple avec un bouchon qui viendrait fermer une extrémité d'un support creux, le raidisseur est en appui sur le bouchon, ou relié ou enfoncé dans le bouchon.

Le raidisseur est par exemple une tige d'une longueur au moins égale à celle du support, ce qui permet au raidisseur de dépasser du support. Il est alors possible de choisir de retirer le raidisseur après l'insertion du support dans un trou pour la réalisation d'une mesure ou de le laisser dans le dispositif.

Selon l'invention, le raidisseur et une paroi du support laissent un espace entre eux, comme un jeu, de sorte que le support conserve une liberté de mouvement en flexion. Dans le cas d'un support creux, l'espace est par exemple ménagé tout autour du raidisseur, alors introduit dans le volume interne du support.

Selon un exemple particulièrement commode de réalisation, le capteur de déformation filiforme est une fibre optique à réseau de Bragg, à un ou plusieurs réseaux.

Les fibres à réseau de Bragg sont particulièrement bien adaptées de par leur géométrie qui permet une introduction facile dans un trou d'un élément de structure, tout en minimisant au mieux les dimensions du trou.

De plus, grâce au dispositif de mesure, il est alors bien plus facile d'insérer une fibre dans un trou tout en préservant son intégrité.

Selon un exemple de réalisation, le support présente une direction longitudinale (D) et une largeur, une direction principale de déformation (d) du capteur de déformation filiforme étant disposée parallèlement à la direction longitudinale (D) du support, sur une surface externe du support, par un ou des points de liaison.

Selon un mode de réalisation intéressant, le support est creux, présente une direction longitudinale (D) et une largeur, et comprend en outre une paroi ayant une épaisseur et présentant une surface externe sur laquelle est positionné le capteur de déformation filiforme par un ou des points de liaison, et une direction principale de déformation (d) du capteur de déformation filiforme est disposée parallèlement à la direction longitudinale (D) du support.

Selon un exemple de réalisation, une zone de mesure du capteur de déformation filiforme est libre par rapport à la surface externe du support, les points de fixation (aussi désignés points de liaison) étant de préférence situés à distance de la zone de mesure du capteur de déformation filiforme afin de ne pas avoir d'influence sur les mesures.

On appelle ici « zone de mesure » une partie, au sein du capteur de déformation filiforme, qui est sensible pour la réalisation de la mesure. Dans le cas, par exemple, d'une fibre à réseau de Bragg, la zone de mesure est alors la zone du réseau de Bragg.

Le support est de préférence adapté à l'utilisation envisagée, par exemple lorsque l'élément dont on cherche à déterminer l'état de contrainte est soumis à une pression radiale importante (comme par exemple un ajustement serré). Un support de forme cylindrique est avantageux. En outre, si l'on choisit un support de forme cylindrique et creuse, il définit une enveloppe fine et relativement flexible, souple, pour être capable d'une certaine déformation radiale, de sorte à ne pas perturber les mesures du capteur de déformation filiforme.

De cette façon, les déformations du capteur de déformation filiforme demeurent fiables car le capteur de déformation filiforme est alors bien moins compressé.

Un tel dispositif permet ainsi non seulement un positionnement précis du capteur de déformation filiforme sur le support, mais aussi son maintien, et de mettre en œuvre le procédé de mesure défini ultérieurement.

De plus, le principe de pré-positionnement d'un capteur de déformation filiforme sur un support destiné à être inséré ultérieurement dans un élément dont on cherche à déterminer l'état de précontrainte, est compatible avec tout type de capteur de déformation filiforme, et notamment une FBG.

Un tel dispositif permet aussi de contrôler le positionnement du capteur de déformation filiforme, et en particulier de sa zone de mesure, sur le support, par exemple grâce à un ou plusieurs marqueurs.

Le capteur de déformation filiforme est de préférence placé sur le support en faisant attention d'avoir un marquage précis de la position de la zone de mesure par rapport à un point de référence sur le support. Une méthode pour maintenir le capteur de déformation filiforme en position sur le support consiste par exemple à utiliser du liant en quelques points, de préférence hors de la zone de mesure.

Cette méthode permet un contrôle efficace de l'orientation du capteur de déformation filiforme sur le support et cette orientation sera conservée lors de l'insertion dans une pièce réceptrice et lors d'une phase d'exploitation.

En effet, pour la réalisation d'une mesure, le dispositif est préférence inséré dans un trou préalablement formé dans un élément de structure préalablement rempli de liant, sous forme liquide ou pâteuse.

Une fois introduit, le dispositif est positionné axialement dans le trou en utilisant de préférence un système de marquage, comme par exemple une butée mécanique ou un contact dans le fond du trou. Un double marquage, à la fois du capteur de déformation filiforme par rapport au support, et du support par rapport à la pièce réceptrice permet un contrôle précis de la position de la zone de mesure par rapport à la pièce réceptrice dont les déformations sont à mesurer.

Pour éviter qu'un support de type creux ne soit rempli de liant lors de son introduction dans une pièce réceptrice dont on cherche à mesurer des déformations, une extrémité du support est de préférence bouchée. Il est alors préférable que la paroi du support soit fermée, c'est-à-dire, par exemple dans le cas d'une section circulaire qu'elle présente une forme en « O » plutôt qu'une forme en « C » qui serait alors ouverte.

Par exemple, le support est bouché par un bouchon dont une extrémité dépasse de l'extrémité du support, ce qui permet, par exemple, de former une butée de protection de l'extrémité du support, ou d'amortir un contact entre le dispositif et par exemple le fond d'un trou lors de l'introduction du dispositif au fond d'un trou fermé, ou encore d'aider et faciliter son insertion.

Avantageusement, le dispositif comporte un tube mince encapsulant au moins le capteur de déformation filiforme grâce à du liant. C'est-à-dire que le tube mince, selon les besoins de l'application, encapsule le capteur de déformation filiforme individuellement pour le protéger, notamment lors de l'insertion du dispositif dans le trou, ou bien le dispositif dans son intégralité, ce qui permet alors d'assurer le positionnement et le maintien du capteur de déformation filiforme sur le support.

On entend ici par « mince » que le tube a de préférence une épaisseur de paroi de sorte à ne pas perturber les mesures.

Le liant est par exemple une résine. Il est toutefois préférable d'utiliser le même liant que celui avec lequel le trou est rempli pour minimiser toute influence du liant sur les mesures. Il est possible d'utiliser toute sorte de liant dès lors qu'il assure son rôle principal d'adhérence entre les parties encollées et qu'il ne flue pas au cours de la mesure de déformation.

Par ailleurs, un capteur de déformation filiforme est généralement sensible à la température. Afin de prendre en compte les variations de température lors des mesures, il est intéressant que le dispositif comporte un capteur de déformation supplémentaire, libre de déformation par rapport au support.

Le capteur de déformation supplémentaire est par exemple situé dans un volume interne défini par la paroi du support lorsque celui-ci est creux, de sorte que sa zone de mesure est libre en déformation (i.e. à contrainte nulle) par rapport à l'élément de structure dans lequel le dispositif sera inséré.

Le capteur de déformation supplémentaire est également optionnellement filiforme, voire torsadé si nécessaire.

Il peut également être encapsulé, comme décrit précédemment, si nécessaire.

Le capteur de déformation supplémentaire est de préférence une fibre à réseau de Bragg. Dans un cadre général, il est avantageux que tous les capteurs de déformation, si le dispositif en comprend plusieurs, soient identiques pour mieux garantir la qualité des mesures, et sont par exemple des fibres optiques à réseau de Bragg.

La présente invention concerne également un élément de structure, dont on cherche à déterminer des contraintes résiduelles, comprenant un trou, dont une première extrémité débouche à une première surface de l'élément, le trou contenant au moins une zone de mesure d'un capteur de déformation filiforme d'un dispositif de mesure de déformation tel que défini précédemment, ainsi qu'un liant formant un film entourant le dispositif de mesure de déformation.

Avantageusement, le support du dispositif sert également de support pour réaliser la connexion à l'extérieur du trou de l'élément de structure, c'est-à-dire relier au moins le capteur de déformation filiforme à un appareil de mesure. Il est alors commode que le support ait une longueur supérieure à la profondeur du trou.

Pour les mesures avec une fibre optique, la connexion optique de la fibre est ensuite par exemple réalisée par un connecteur fixé sur l'élément ou par une liaison en bout de la fibre pour une connexion à distance.

La présence d'autres marqueurs, par exemple à la fois sur le dispositif (et en particulier sur le support) et sur la première surface de l'élément permet en outre un contrôle précis de l'orientation et du positionnement du dispositif dans l'élément, et par conséquent de la zone de mesure du capteur de déformation filiforme par rapport à l'élément récepteur.

Le trou est avantageusement dimensionné de sorte que sa largeur est légèrement supérieure à celle du support. C'est-à-dire que le trou est dimensionné de sorte à ne ménager qu'un jeu entre lui et le dispositif. Un jeu trop faible rendrait difficile l'insertion du dispositif à cause de la viscosité du liant qui ne pourrait plus s'écouler facilement entre le dispositif et la paroi du trou. Inversement, un jeu trop important fausserait les mesures car le capteur de déformation filiforme positionné sur le support du dispositif ne serait plus assez proche de la paroi du trou pour réaliser une mesure représentative.

De plus, plus le trou présente de faibles dimensions, moins le comportement du l'élément sera influencé par la présence du dispositif, ni la rigidité de la structure impactée.

Le trou présente de préférence une section circulaire, sa largeur correspondant alors au diamètre du trou. Dans ce cas, il est par exemple réalisé par un alésage. Il peut toutefois présenter toute sorte de forme, par exemple octogonale, ou une forme complémentaire de celle du dispositif, ce qui permettrait en outre de servir de détrompeur, garantissant alors l'orientation du dispositif dans l'élément récepteur. De tels trous peuvent alors être réalisés, par exemple, par électroérosion ou directement lors de la réalisation de l'élément.

Les dimensions relatives du trou et du dispositif permettent en outre que l'épaisseur d'un film de liant interposé entre le support et une paroi latérale du trou demeure relativement faible. Ainsi, le capteur de déformation filiforme est au plus près possible de la surface du trou où la mesure est supposée être prise. De plus, la mesure est alors peu perturbée par le comportement mécanique du film de liant.

Avantageusement, le trou présente une seconde extrémité qui est fermée, c'est-à-dire aveugle, borgne, soit parce qu'elle a été bouchée, obstruée, soit parce que le trou est non débouchant à sa seconde extrémité, non traversant.

Un trou fermé facilite l'insertion du dispositif en permettant un contrôle de son positionnement axial, en amenant le support en butée contre le fond du trou.

De préférence le trou est réalisé au cœur de l'élément, i.e. de préférence au centre, ou à proximité d'une fibre neutre, pour mesurer la contrainte liée à une traction ou une compression de l'élément sans être parasité par une instabilité en flexion par exemple. Avantageusement, le trou est contenu au moins approximativement par un axe de symétrie de l'élément.

Le trou peut être aussi formé en périphérie d'un élément de fixation, et il est alors possible de faire plusieurs trous comprenant chacun un dispositif pour prendre en compte une instabilité, un flambage, une flexion de l'élément.

Enfin, la présente invention concerne aussi un procédé de mesure d'une déformation selon une direction donnée au sein d'un élément de structure, comportant au moins les étapes suivantes :
- On introduit du liant dans un trou formé dans l'élément ;
- On insère un dispositif tel que défini précédemment dans le trou rempli de liant ; et
- On branche un capteur de déformation filiforme du dispositif à un appareil de mesure.

Ainsi, un tel procédé est compatible avec une large gamme d'éléments, et notamment d'éléments de fixation, couramment utilisés en aéronautique (incluant les éléments de fixation emboutis, par exemple pour un sertissage).

Avantageusement, on introduit le dispositif en même temps qu'un raidisseur, et on retire le raidisseur une fois le dispositif inséré dans le trou, ce qui permet, par exemple, de minimiser tout risque de flambage du support lors de l'introduction du dispositif. Par exemple, si le dispositif comprend un support creux, on introduit le dispositif en même temps qu'un raidisseur disposé à l'intérieur d'un support creux du dispositif et on retire le raidisseur une fois le dispositif inséré dans le trou.

Retirer le raidisseur permet, dans ce cas, de laisser plus de latitude au support pour se déformer radialement, ce qui est particulièrement intéressant dans un ajustement serré.

Et de préférence, on introduit le dispositif dans l'élément au moyen du raidisseur, ce qui garantit une zone de préhension sans risque d'endommager le support ou le capteur de déformation filiforme.

L'invention, selon un mode préférentiel de réalisation, sera bien comprise et ses avantages apparaîtront mieux, à la lecture de la description détaillée qui suit, donnée à titre illustratif et nullement limitatif, et en référence aux dessins annexés présentés ci-après. L'invention est définie dans les revendications indépendantes.
La figure 1 représente un dispositif selon l'invention ;
La figure 2 présente en détail une extrémité du dispositif destinée à être insérée au fond d'un trou ;
La figure 3 représente le dispositif dans un élément de fixation ; et
La figure 4 présente en détail le dispositif dans le fond du trou.

Un dispositif selon l'invention comprend un support 1 dont une extrémité 11 est fermée par un bouchon 2, un raidisseur 3, et une fibre optique à réseau de Bragg en guise de capteur de déformation filiforme 4. La description qui suit serait toutefois valable avec tout type de capteur de déformation filiforme, torsadé ou non, tel que précité, à la place d'une fibre à réseau de Bragg.

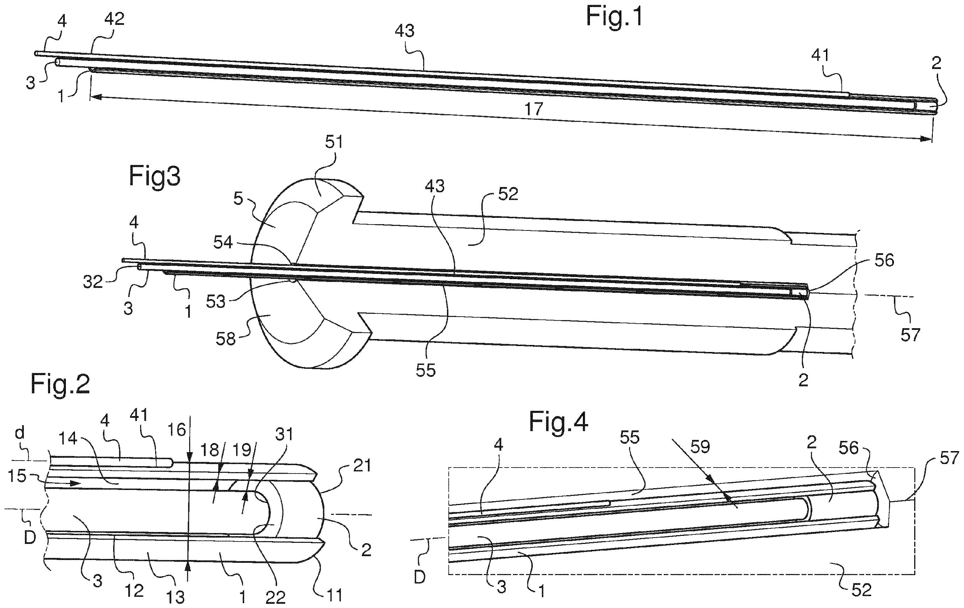

Dans l'exemple de réalisation représenté sur les figures 1 à 4, le support 1 présente une forme cylindrique creuse à section circulaire, c'est-à-dire une forme tubulaire. Il comporte une paroi 12 ayant une surface externe 13 et une surface interne 14 délimitant un volume interne 15. Il comporte aussi deux extrémités, dont une extrémité 11 est obstruée par un bouchon 2, inséré au moins en partie dans le volume interne 15. Le bouchon 2 sert d'une part à empêcher que du liant ne s'introduise dans le support lorsque le dispositif est inséré dans un trou 53, et d'autre part à maintenir un raidisseur 3.

Le support 1 présente une largeur 16 et une longueur 17. La largeur 16 correspond à un diamètre externe du support 1 (mesurée orthogonalement à un axe longitudinal D).

La surface externe 13 et la surface interne 14 définissent entre elles une épaisseur 18 de la paroi 12, qui est au moins dix fois plus petite que la largeur 16.

Le bouchon 2 présente une première extrémité définie par une surface extérieure 21 et une deuxième extrémité définie par une surface intérieure 22 dirigée vers le volume interne 15 du support 1. Le bouchon 2 présente une forme cylindrique complémentaire de la surface interne 14 du support 1 afin d'assurer une étanchéité à l'extrémité 11 du support 1.

La surface extérieure 21 du bouchon 2 et l'extrémité 11 du support 1 sont ici coplanaires. De plus, l'extrémité 11 du support 1 ainsi que la surface 21 du bouchon 2 présentent ici une coupe droite, c'est-à-dire orthogonale à l'axe longitudinal D du support 1. Selon un autre exemple de réalisation non représenté, elle pourrait être biseautée de sorte à faciliter l'insertion du dispositif dans le trou, ou la surface 21 du bouchon 2 pourrait dépasser de l'extrémité 11 de sorte à former un amortisseur lorsque le dispositif vient en butée au fond d'un trou.

La deuxième extrémité du bouchon définie par la surface 22 est parallèle à la surface 21. Elle reçoit une extrémité 31 du raidisseur 3, qui est par exemple en appui mais de préférence collée au milieu de la surface 22.

Le raidisseur 3 a également une forme cylindrique à section circulaire, de sorte à former une tige.

Ainsi, le support 1, le bouchon 2 et le raidisseur 3 sont alignés par rapport à l'axe D qui forme ainsi un axe de symétrie de cet ensemble.

Le raidisseur 3 et la surface interne 14 définissent entre eux un espace 19 dans le volume interne 15 permettant au support 1 de conserver une flexibilité malgré la présence du raidisseur 3. Il est par exemple possible de positionner un capteur de déformation supplémentaire (non représenté) dans cet espace afin de compenser les variations thermiques par exemple, comme exposé précédemment.

En outre, le raidisseur 3 dépasse du support 1 à son autre extrémité 32 ce qui permet de constituer une zone de préhension pour manipuler le dispositif.

Le capteur de déformation filiforme 4 est ici une fibre à réseau de Bragg positionnée sur la surface externe 13 du support 1.

Le capteur de déformation filiforme 4 présente un axe d parallèle à l'axe D du support 1 selon lequel il est apte à se déformer. L'axe d constitue ainsi une direction principale de déformation d'une zone de mesure 43 du capteur de déformation filiforme 4, en l'occurrence d'au moins un réseau de Bragg d'une fibre. Le capteur de déformation filiforme 4 est relié au support 1 par deux points de liant situés aux extrémités du capteur de déformation filiforme 4. Dans le présent exemple de réalisation, le capteur de déformation filiforme 4 dépasse du support 1 du côté de son extrémité par laquelle dépasse le raidisseur 3. Les points de liaison sont alors de préférence situés à une extrémité 41 du capteur de déformation filiforme 4 et à un point 42 situé à distance de la zone de mesure 43. La zone de mesure est par exemple située au milieu des deux points 41, 42.

Le dispositif tel que décrit précédemment est destiné à être inséré dans un trou 53 d'un élément 5.

Selon le présent exemple de réalisation, l'élément 5 présente une tête 51 et un corps 52 tels qu'un axe 57 de l'élément 5 en constitue un axe de symétrie.

Le trou 53 présente une surface 55, une première extrémité 54 débouchant à une surface 58 de la tête 51, et une deuxième extrémité 56 formant un fond. Le trou 53, réalisé par exemple ici par alésage, est fermé, non débouchant. Lorsque le dispositif est inséré dans le trou 53, l'extrémité 21 du bouchon 2 vient alors en butée contre le fond 56 du trou 53 ce qui garantit le positionnement du capteur de déformation filiforme 4, et notamment de sa zone de mesure 43, selon l'axe 57. La surface 58 peut en outre présenter au moins un marqueur facilitant l'orientation du dispositif dans le trou (un tel marqueur n'est pas figuré ici).

Le support 1 ou le raidisseur 3 peuvent en outre présenter au moins un marqueur localisé à l'extérieur de l'élément 5 facilitant le contrôle de la position du dispositif.

Le trou 53 présente en outre une profondeur selon l'axe 57 telle que, lorsque le dispositif est inséré dans le trou 53, le trou 53 comprend au moins la zone de mesure 43 du capteur de déformation filiforme 4, c'est-à-dire, en l'occurrence, le réseau de Bragg de la fibre. Avantageusement, le dispositif dépasse de l'extrémité 54 du trou 53 de sorte à faciliter sa manipulation.

Avant insertion du dispositif, le trou 53 est rempli partiellement ou complètement de liant (non représenté). La surface 55 du trou et le dispositif définissent entre eux un jeu 59, c'est-à-dire un faible espace, de sorte que le liant forme alors un film autour du dispositif inséré dans le trou 53. En outre le liant recouvre au minimum la zone de mesure 43.

De plus, le trou 53 est positionné de sorte que l'axe 57 de l'élément 5 est au moins approximativement confondu avec l'axe D du support 1 du dispositif, c'est-à-dire que le trou 53 est formé de préférence à partir du centre de la surface 58, de sorte que le dispositif mesure les déformations les plus au cœur possible de l'élément 5.

Pour la réalisation des mesures, le capteur de déformation filiforme 4 est ensuite relié à un appareil de mesure, non représenté ici.

## Revendications

1. Dispositif de mesure de déformation, destiné à être inséré dans un trou d'un élément de structure dont la déformation est à mesurer, présentant une forme allongée pour pouvoir être introduit dans le trou et comportant au moins un capteur de déformation filiforme (4), un support (1) de forme longiligne, le capteur de déformation filiforme (4) étant positionné sur une surface externe (13) du support (1) par un ou des points de liaison (41, 42) avec une direction principale de déformation (d) du capteur de déformation filiforme (4) disposée parallèlement à une direction longitudinale (D) du support (1), le dispositif étant **caractérisé en ce que** le support (1) est creux et **en ce que** le dispositif comporte un raidisseur (3) introduit dans un volume interne du support (1) et formé d'une tige disposée longitudinalement par rapport au support (1) en étant libre ou fixé en au plus un point au support (1) afin de ne pas influencer la mesure et conférant davantage de rigidité au support (1), le raidisseur (3) et une paroi (12) du support (1) laissant un espace (19) entre eux, ménagé tout autour du raidisseur (3), de sorte que le support (1) conserve une liberté de mouvement en flexion.

2. Dispositif selon la revendication 1, **caractérisé en ce que** le raidisseur (3) est au plus fixé en un point au support (1).

3. Dispositif selon l'une quelconque des revendications 1 ou 2, **caractérisé en ce que** le capteur de déformation filiforme (4) est une fibre optique à réseau de Bragg.

4. Dispositif selon la revendication 1 à 3, **caractérisé en ce qu'**une extrémité (11) du support (1) est bouchée par un bouchon (2).

5. Dispositif selon la revendication 4, **caractérisé en ce que** le raidisseur (3) est en appui sur le bouchon (2), ou relié ou enfoncé dans le bouchon (2).

6. Dispositif selon l'une quelconque des revendications 1 à 5, **caractérisé en ce qu'**il comporte un tube mince encapsulant au moins le capteur de déformation filiforme (4) grâce à du liant.

7. Dispositif selon l'une quelconque des revendications 1 à 6, **caractérisé en ce qu'**il comporte un capteur de déformation supplémentaire, libre de déformation par rapport au support (1), et situé dans un volume interne (15) défini par la paroi (12) du support (1) creux.

8. Elément de structure (5) comportant un dispositif de mesure de déformation selon l'une quelconque des revendications 1 à 7 et comprenant un trou (53) dont une première extrémité (54) débouche à une première surface (58) de l'élément (5), le trou (53) contenant au moins la zone de mesure (43) du capteur de déformation filiforme (4) du dispositif de mesure de déformation ainsi qu'un liant formant un film entourant le dispositif de mesure de déformation.

9. Elément de structure (5) selon la revendication 8, **caractérisé en ce que** le trou (53) présente une seconde extrémité (56) qui est fermée.

10. Elément de structure (5) selon l'une des revendications 8 ou 9, **caractérisé en ce que** le trou (53) est contenu au moins approximativement par un axe de symétrie (57) de l'élément (5).

11. Procédé de mesure d'une déformation selon une direction donnée au sein d'un élément de structure (5), **caractérisé en ce qu'**il comporte au moins les étapes suivantes :
- On introduit du liant dans un trou (53) formé dans l'élément (5) ;
- On insère un dispositif selon l'une quelconque des revendications 1 à 7 dans le trou (53) rempli de liant ; et
- On branche un capteur de déformation filiforme (4) du dispositif à un appareil de mesure.

12. Procédé selon la revendication 11, **caractérisé en ce qu'**on introduit le dispositif au moyen du raidisseur (3) disposé à l'intérieur du support (1) creux et **en ce qu'**on retire le raidisseur (3) une fois le dispositif inséré dans le trou (53).

## Patentansprüche

1. Vorrichtung zur Deformationsmessung zum Einsetzen in eine Bohrung eines Strukturelements, dessen Deformation zu messen ist, und die eine längliche Form aufweist, um in die Bohrung eingesetzt werden zu können, und die mindestens einen fadenförmigen Deformationssensor (4) und einen Träger (1) von langgliedriger Form aufweist, wobei der fadenförmige Deformationssensor (4) auf einer Außenfläche (13) des Trägers (1) über einen oder mehrere Verbindungspunkte (41, 42) positioniert ist, mit einer Hauptverformungsrichtung (d) des fadenförmigen Deformationssensors (4), die sich parallel zu einer Längsrichtung (D) des Trägers (1) befindet, wobei die Vorrichtung **dadurch gekennzeichnet ist, dass** der Träger (1) hohl ist, und dadurch, dass die Vorrichtung eine Versteifung (3) aufweist, die in ein Innenvolumen des Trägers (1) eingeführt ist und aus einer längs im Verhältnis zum Träger (1) angeordneten Stange gebildet wird, die frei ist oder höchstens an einer Stelle am Träger (1) befestigt ist, damit die Messung nicht beeinflusst wird, und dem Träger (1) eine größere Festigkeit verleiht, wobei die Versteifung (3) und eine Wand (12) des Trägers (1) einen Raum (19) zwischen sich belassen, der so um die Versteifung (3) herum angeordnet ist, dass der Träger (1) eine Bewegungsfreiheit in der Flexion bewahrt.

2. Vorrichtung nach Anspruch 1, **dadurch gekennzeichnet, dass** die Versteifung (3) höchstens an einer Stelle am Träger (1) befestigt ist.

3. Vorrichtung nach einem der Ansprüche 1 bis 2, **dadurch gekennzeichnet, dass** der fadenförmige Deformationssensor (4) eine optische Faser mit einem Bragg-Spiegel ist.

4. Vorrichtung nach Anspruch 1 bis 3, **dadurch gekennzeichnet, dass** ein Ende (11) des Trägers (1) durch einen Stopfen (2) verschlossen ist.

5. Vorrichtung nach Anspruch 4, **dadurch gekennzeichnet, dass** die Versteifung (3) auf dem Stopfen (2) aufliegt oder mit dem Stopfen (2) verbunden oder in diesen hineingesteckt ist.

6. Vorrichtung nach einem der Ansprüche 1 bis 5, **dadurch gekennzeichnet, dass** sie eine dünne Röhre umfasst, die mindestens den fadenförmigen Deformationssensor (4) mittels eines Bindemittels umschließt.

7. Vorrichtung nach einem der Ansprüche 1 bis 6, **dadurch gekennzeichnet, dass** sie einen zusätzlichen Deformationssensor aufweist, der frei von Verformungen in Bezug auf den Träger (1) ist und sich in einem durch die Wand (12) definierten Innenvolumen (15) des hohlen Trägers (1) befindet.

8. Strukturelement (5), das eine Vorrichtung zur Deformationsmessung nach einem der Ansprüche 1 bis 7 aufweist und eine Bohrung (53) aufweist, deren erstes Ende (54) auf eine erste Oberfläche (58) des Elements (5) mündet, wobei die Bohrung (53) mindestens die Messzone (43) des fadenförmigen Deformationssensors (4) der Vorrichtung zur Deformationsmessung enthält sowie ein Bindemittel, das einen Film bildet, der die Vorrichtung zur Deformationsmessung umgibt.

9. Strukturelement (5) nach Anspruch 8, **dadurch gekennzeichnet, dass** die Bohrung (53) ein zweites Ende (56) aufweist, das geschlossen ist.

10. Strukturelement (5) nach einem der Ansprüche 8 oder 9, **dadurch gekennzeichnet, dass** die Bohrung (53) zumindest annähernd in einer Symmetrieachse (57) des Elements (5) enthalten ist.

11. Verfahren zum Messen einer Deformation in einer gegebenen Richtung innerhalb eines Strukturelements (5), **dadurch gekennzeichnet, dass** es mindestens die folgenden Schritte aufweist:
- Einführen des Bindemittels in eine Bohrung (53), die in dem Element (5) gebildet wird;
- Einsetzen einer Vorrichtung nach einem der Ansprüche 1 bis 7 in die mit Bindemittel gefüllte Bohrung (53); und
- Anschließen eines fadenförmigen Deformationssensors (4) der Vorrichtung an ein Messgerät.

12. Verfahren nach Anspruch 11, **dadurch gekennzeichnet, dass** die Vorrichtung mithilfe der Versteifung (3), die innerhalb des hohlen Trägers (1) angeordnet ist, eingesetzt wird und dass die Versteifung (3) herausgezogen wird, sobald die Vorrichtung in die Bohrung (53) eingeführt wurde.

## Claims

1. Apparatus for measuring deformation, designed to be inserted in a hole of a structural element, the deformation of which is to be measured, having an elongate form in order to be able to be inserted into the hole and comprising at least one thread-like deformation sensor (4), a support (1) of longilinear form, the thread-like deformation sensor (4) being positioned on an external surface (13) of the support (1) by one or more link points (41, 42) with a main deformation direction (d) of the thread-like deformation sensor (4) arranged parallel to a longitudinal direction (D) of the support (1), the apparatus being **characterized in that** the support (1) is hollow, and **in that** the apparatus comprises a stiffener (3) introduced into an internal volume of the support (1) and formed from a rod arranged longitudinally relative to the support (1) whilst being free or fixed at at most one point on the support (1) so as not to influence measurement and conferring greater stiffness on the support (1), the stiffener (3) and a wall (12) of the support (1) leaving a space (19) between them, provided right around the stiffener (3), such that the support (1) retains bending movement freedom.

2. Apparatus according to Claim 1, **characterized in that** the stiffener (3) is at most fixed at one point to the support (1).

3. Apparatus according to either of Claims 1 and 2, **characterized in that** the thread-like deformation sensor (4) is a fibre Bragg grating.

4. Apparatus according to Claim 1 to 3, **characterized in that** one end (11) of the support (1) is plugged by a plug (2).

5. Apparatus according to Claim 4, **characterized in that** the stiffener (3) bears on the plug (2) or is connected or pushed in the plug (2).

6. Apparatus according to any one of Claims 1 to 5, **characterized in that** it comprises a thin tube encapsulating at least the thread-like deformation sensor (4) by virtue of binder.

7. Apparatus according to any one of Claims 1 to 6, **characterized in that** it comprises a supplementary deformation sensor, free of deformation relative to the support (1) and located in an internal volume (15) defined by the wall (12) of the hollow support (1).

8. Structural element (5) comprising an apparatus for measuring deformation according to any one of Claims 1 to 7 and comprising a hole (53), a first end (54) of which opens out at a first surface (58) of the element (5), the hole (53) containing at least the measuring zone (43) of the thread-like deformation sensor (4) of the apparatus for measuring deformation and also a binder forming a film surrounding the apparatus for measuring deformation.

9. Structural element (5) according to Claim 8, **characterized in that** the hole (53) has a second end (56) that is closed.

10. Structural element (5) according to one of Claims 8 and 9, **characterized in that** the hole (53) is contained at least approximately by an axis (57) of symmetry of the element (5).

11. Method for measuring a deformation according to a given direction within a structural element (5), **characterized in that** it comprises at least the following steps:
- binder is introduced into a hole (53) formed in the element (5);
- an apparatus according to any one of Claims 1 to 7 is inserted into the hole (53) filled with binder; and
- a thread-like deformation sensor (4) of the apparatus is connected to a measuring device.

12. Method according to Claim 11, **characterized in that** the device is introduced by means of the stiffener (3) arranged inside the hollow support (1), and **in that** the stiffener (3) is withdrawn once the apparatus has been inserted into the hole (53) .
